(19) Europäisches Patentamt

European Patent Office

Office européen des brevets

(11) EP 0 552 835 B1

(12) EUROPEAN PATENT SPECIFICATION

(45) Date of publication and mention
of the grant of the patent:
**11.12.1996 Bulletin 1996/50**

(51) Int Cl.6: **F16H 57/12**

(21) Application number: **93200111.8**

(22) Date of filing: **18.01.1993**

(54) **Transmission with variable mechanical prestress**

Getriebe mit veränderlicher mechanischer Vorspannung

Transmission à précontrainte mécanique variable

(84) Designated Contracting States:
**DE FR GB IT**

(30) Priority: **24.01.1992 EP 92200193**

(43) Date of publication of application:
**28.07.1993 Bulletin 1993/30**

(73) Proprietor: **Philips Electronics N.V.**
**5621 BA Eindhoven (NL)**

(72) Inventors:
• **Koster, Marinus Pieter**
**NL-5656 AA Eindhoven (NL)**
• **Kruijer, Casparus Willibrordus**
**NL-5656 AA Eindhoven (NL)**

(74) Representative:
**Cuppens, Hubertus Martinus Maria et al**
**INTERNATIONAAL OCTROOIBUREAU B.V.,**
**Prof. Holstlaan 6**
**5656 AA Eindhoven (NL)**

(56) References cited:
**JP-A-60 116 947        US-A- 2 373 663**
**US-A- 3 383 947**

• **IBM TECHNICAL DISCLOSURE BULLETIN vol.**
**27, no. 9, February 1985, NEW YORK US pages**
**5461 - 5463 ZALUCKY 'ANTI-BACKLASH RACK**
**AND PINION DRIVE'**
• **IBM TECHNICAL DISCLOSURE BULLETIN vol.**
**23, no. 3, August 1980, NEW YORK US page 1105**
**SURVANT 'ANTI-BACKLASH MOTOR**
**MOUNTING'**

## Description

The invention relates to a transmission with variable mechanical prestress comprising a toothed drive element driven by an electric motor and a toothed driven element cooperating with the drive element, at least one of the two elements being rotatable, and comprising an electromagnetic actuator for applying a prestress force which is controllable in dependence on a load to be instantaneously transmitted, whereby the toothed elements are pressed against one another with the flanks of their mutually engaging teeth.

Mechanisms driven by electric motors are often used where accurate movements and positionings are essential. In many cases, comparatively quick movements should also be carried out with these mechanisms. The electric motor and the load should then be optimally adapted to one another. Various possibilities are available for this. A first possibility is that an electric motor specially manufactured for the envisaged speed and power range is used. This specially manufactured electric motor will have a high cost price. A second possibility is to buy a commercially available electric motor and to adapt it to the load by means of a gear transmission. In this latter case, the play and the friction in the transmission are felt to be disadvantageous.

Gearwheels have dimensional deviations owing to manufacturing defects. In general, therefore, a certain clearance is necessary for having a gear transmission function. This clearance, however, leads to a decrease in the positioning accuracy. Methods have accordingly been devised for compensating this clearance by force application in that the gearwheels are mechanically prestressed, *i.e.* a prestress force is applied to the gearwheels. This prestress force must be such that the clearance path is not traversed at the maximum load and when the load is reversed. As a result, the prestress force is generally too high during normal operation. Especially at low loads, *i.e.* at low speeds and low acceleration, there is an excess prestress force and, as a result, comparatively much friction.

In gear transmissions there is a sliding effect in those points where there is contact between the teeth. The sliding effect together with the prestress force causes additional friction in the contact points. This friction leads to hysteresis which results in a so-called virtual play. This hysteresis or virtual play reduces the positioning accuracy.

The invention relates to the widely used gear transmissions with straight or sloping teeth, to gear transmissions with helical gears, to wormwheel transmissions, to rack-and-pinion transmissions, and in general to transmissions in which at least one of the toothed elements has rotation bearings.

A transmission as described in the opening paragraph is known from the publication "Constructieprincipes" ("Construction Principles") issued by the Mechanical Engineering Faculty of the University of Technology, Eindhoven, January 1990, by M.P. Koster, no. V 2.3.6, page 104: "Spelingsvrije overbrenging met variabele voorspanning" ("Play-free transmission with variable prestress").

In this known transmission, two gearwheels are prestressed relative to one another in circumferential direction hydraulically or by means of an electromagnetic actuator, the two gearwheels being in engagement with a common pinion. The hydraulic version has the disadvantage that the seals necessary for hydraulic systems are somewhat elastic and cause friction. The mechanical version has the disadvantage that the electromagnetic actuator must be mounted on one of the two rotating gearwheels, since the tangential prestress must be controllable during rotation. A co-travelling actuator, however, is difficult to realise because of the electric current supply arrangements. In addition, the load is transmitted to the pinion through only one of the two gearwheels. The dimensions and the mass inertia must be small, while nevertheless a considerable force must be exerted. The mass inertia must be kept small because the actuator is mounted on a rotating part, and thus must follow all accelerations.

The invention has for its object to provide a transmission which does not exhibit these disadvantages and which is play-free, low in friction and low in hysteresis, so that it has a small virtual play, whereby the positioning accuracy compared with conventional transmissions is improved.

According to the invention, this object is substantially achieved by the features of the characterizing part of claim 1.

By regulating the prestress force in dependence on the load in the transmission, this force can be adapted to the instantaneous need. A high prestress force is necessary for keeping the play equal to zero at great loads in the transmission. During positioning, when the speeds and accelerations are almost zero, a low prestress force is sufficient, so that the positioning error resulting from hysteresis is as small as possible. Gear tooth errors may result in a relative displacement of the two elements in radial direction against the applied prestress force.

It is noted that the expression "radial direction" used above is understood to mean a direction perpendicular or substantially perpendicular to the centreline of the rotatable element, whereby relative displacements of the two elements lead to a variation in their relative distance, as opposed to the tangential direction.

It is further noted that JP-A-60116947 discloses a transmission according to the preamble of claim 1, in which a constant prestress force is applied to the cooperating toothed elements by a spring to prevent backlash between the elements when the elements come to a standstill. When the elements are being driven by the motor, a constant backlash is applied between the toothed elements in that a body carrying one of the elements is swayed by a magnet against the force of the spring. The backlash quantity is determined by the position of a lever which is adjustable. In this known transmission, therefore, either a constant prestress force or a constant backlash is present between the toothed elements. Therefore, the known transmission does not constitute a transmission with a regulated mechanical prestress force which is controllable instantaneously in dependence on a load to be transmitted. Furthermore, when the magnet in the known transmission is energized, a backlash is introduced between the elements. Therefore, the magnet is not used to press the elements against one another so as to generate a prestress force between the elements.

A special embodiment of the transmission according to the invention, comprising a pinion on an input shaft and a gearwheel on an output shaft which is parallel to the input shaft, is characterized in that the gearwheel with the output shaft has its bearings in the housing and the pinion is provided on the motor shaft of the electric motor, while the electric motor is tiltable relative to the housing about a pivot axis which is directed transverse to the plane through the motor shaft and the output shaft.

The two elements, pinion and gearwheel, could be displaced relative to one another in radial direction, for example, by means of a parallel guide. Since the electric motor with the pinion is mounted with tilting possibility according to the measures in the characteristic, however, a smaller mass to be displaced is obtained compared with a parallel displacement. In addition, the driven output shaft rotates more slowly than the motor shaft and is also heavier. Moreover, the output shaft generally forms part of a driven mechanism.

The angles enclosed by the gearwheels as a result of the tilting movement are so small that the tilting movement approximates a pure parallel movement with sufficient accuracy.

The electric motor may be provided, for example, on a hinge pin with rotation possibility to achieve the tilting movement, which hinge pin is connected to the stationary housing. Such hinge constructions, however, always have some play. This disadvantage is counteracted in another embodiment of the transmission according to the invention in that the electric motor is coupled to the stationary housing with relative movement possibility by means of two pairs of blade springs which form a cross spring pivot. These measures provide a frictionless, play-free and low-hysteresis suspension of the electric motor which is rotatable about one axis and which has a comparatively high rigidity in all other directions.

In a further preferred embodiment of the transmission according to the invention, the electromagnetic actuator is constructed as an electromagnet of the EI type with an E-shaped yoke and an I-shaped armature, the E-shaped yoke being fastened on the stationary housing together with a coil and the I-shaped armature being provided on the motor housing of the electric motor. Electromagnets of the EI type are of compact dimensions and have a comparatively high force density. The prestress force may be varied in that it is ensured that a current in the coil is a function of the instantaneous load in the transmission. The armature exerts the actuator force on the gearwheels.

According to another embodiment of the transmission according to the invention, the transmission comprises a control circuit for controlling the prestress force, which control circuit is provided with a differential circuit for determining a difference between a signal depending on the motor current and a signal depending on the motor acceleration, which control circuit is further provided with a summation circuit for determining the sum of a signal supplied by the differential circuit and a signal depending on the motor speed, and which control circuit is also provided with an amplifier for converting a signal supplied by the summation circuit into an actuator current for energizing the actuator. The required prestress force depends on the power to be transmitted and on gear tooth errors. The gear tooth errors give rise to a radial force as a function of the motor speed and the teeth frequency. The gear tooth errors cause the effect that the mechanical system can be brought into resonance during operation. The prestress around the critical speeds at which the mechanical system will vibrate in its natural frequency must accordingly be greater than at other speeds. The required prestress as a function of the motor speed can be experimentally determined. The prestress force also depends on the power to be transmitted. The actuator current to be supplied to the actuator, therefore, is a function of the current supplied to the motor. Part of the motor current is used for accelerating the rotor of the motor. This part of the motor current does not contribute to the power to be transmitted and should therefore be subtracted from the motor current. If the motor current is not corrected in this manner, a too great prestress force will be applied during acceleration.

When an electromagnet of the EI type is used as the actuator, the prestress force $F_{actuator}$ to be provided by the actuator for a comparatively small displacement between yoke and armature depends on the actuator current $I_{actuator}$ as follows:

$$F_{actuator} = C * I_{actuator}^2$$

in which C is a constant. To obtain a linear relationship between the motor current and the force $F_{actuator}$ in an embodiment of the transmission according to the invention, the control circuit is provided with a root extractor circuit connected between the differential circuit and the summation circuit for determining the square root of the signal supplied by the differential circuit. The signal supplied by the differential circuit is a measure for the relevant motor current. By taking the square root of this signal and then supplying this signal to the actuator, a linear relationship between the prestress force and the motor current is obtained.

The transmission according to the invention may be used in constructions which serve for accurate positioning and/or accurate following of a path.

The invention will be explained in more detail with reference to the drawing, in which:

Fig. 1 diagrammatically shows an embodiment of the transmission in side elevation and partly in longitudinal section,

Fig. 2 shows a practical embodiment of the transmission according to the invention in side elevation and longitudinal section,

Fig. 3 shows the transmission of Fig. 2 in front elevation,

Fig. 4 shows the transmission of Fig. 2 in rear elevation,

Fig. 5 shows the electromagnetic actuator used,

Fig. 6 shows a detail of the actuator,

Fig. 7 diagrammatically shows an alternative embodiment of the transmission according to the invention, and

Fig. 8 shows the transmission of Fig. 1 in conjunction with a block diagram.

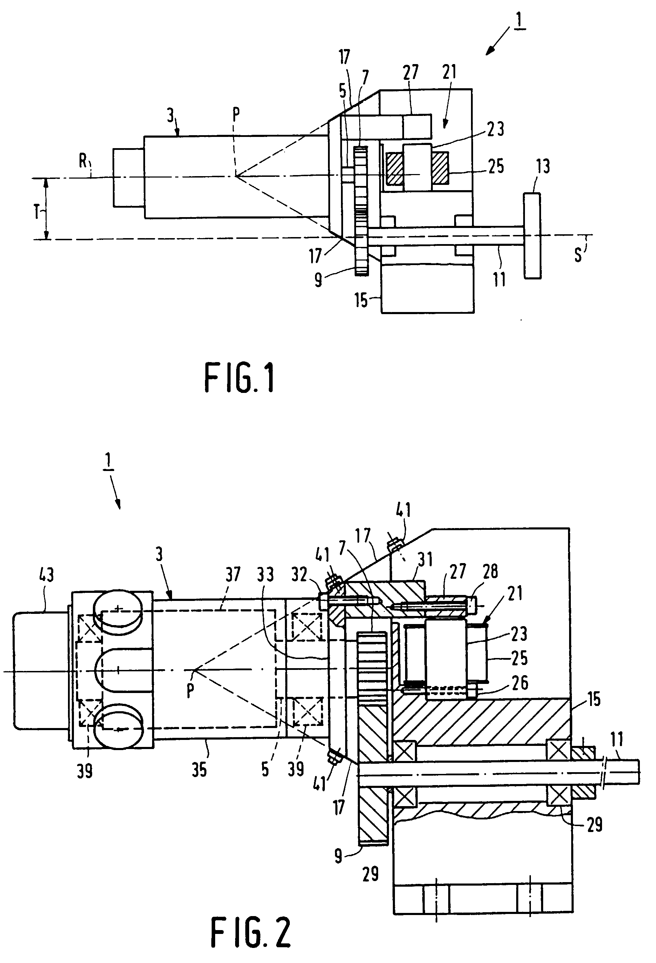

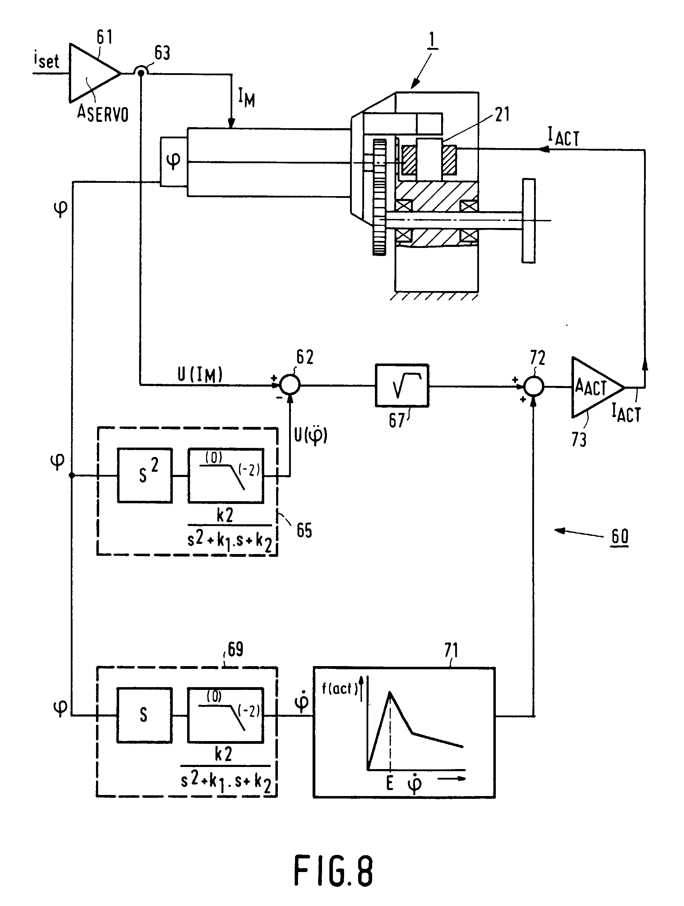

Fig. 1 shows a transmission 1 comprising an electric motor 3 with a motor shaft 5 on which a gearwheel 7 is fastened which is in engagement with a gearwheel 9 provided on a driven output shaft 11. The electric motor 3 may be a servomotor. Reference numeral 13 denotes a load on the output shaft 11. The driven gearwheel 9 with the output shaft 11 has its rotation bearings in a stationary housing 15. The servomotor 3 is smoothably suspended from the housing 15 by means of two pairs of parallel blade springs 17 constructed as a cross-spring pivot and is tiltable relative to the housing 15 about the pivot P which lies on the virtual hinge axis formed by the line of intersection of the blade springs 17. An electromagnetic actuator 21 comprises a yoke 23 with a coil 25 fastened on the housing 15 and an armature 27 provided on the servomotor 3. To apply a prestress force to the gearwheels 7 and 9, a controlled current through the coil 25 exerts a controlled attraction force on the movable armature 27, so that the servomotor 3 which is tiltable about the pivot P, and thus the gearwheel 7 on the motor shaft 5, is pressed against the gearwheel 9 with a controlled prestress force in radial direction. The centreline of the motor shaft 5 has reference 12, while S denotes the centreline of the output shaft 11. T is the centre-to-centre distance between the two centrelines, so between the shafts. The control of the prestress force will be explained in more detail below with reference to Fig. 8.

Figs. 2, 3 and 4 show a practical implementation of the embodiment of Fig. 1, in which comparable parts have the same reference numerals.

Fig. 2 shows that the output shaft 11 is rotatably supported in the housing 15 by means of ball bearings 29. The yoke 23 of the actuator 21 with the coil 25 is clearly visible, fastened with screws 26 on the housing. The armature 27 of the actuator 21 is fixedly connected to the housing 35 of the servomotor 3 by means of screws 28 and 32, with an interposed block 31 and a plate 33.

The motor shaft 5 with the rotor 37 is supported in the housing 35 of the servomotor 3 by means of ball bearings 39. The servomotor 3 is movably suspended from the housing 15 by means of blade springs 17 which are fastened with one end on the housing 15 and with the other end on the plate 33 by means of screws 41. Reference numeral 43 denotes an angular position transducer.

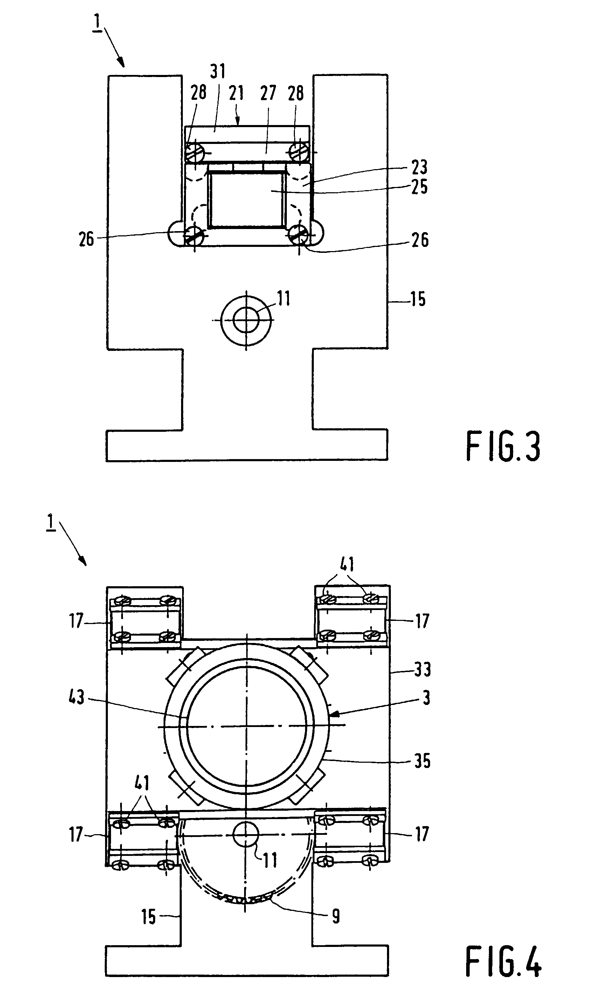

The electromagnetic actuator 21 is clearly depicted in Fig. 3. The positions and fastenings of the blade springs 17 are evident from Fig. 4.

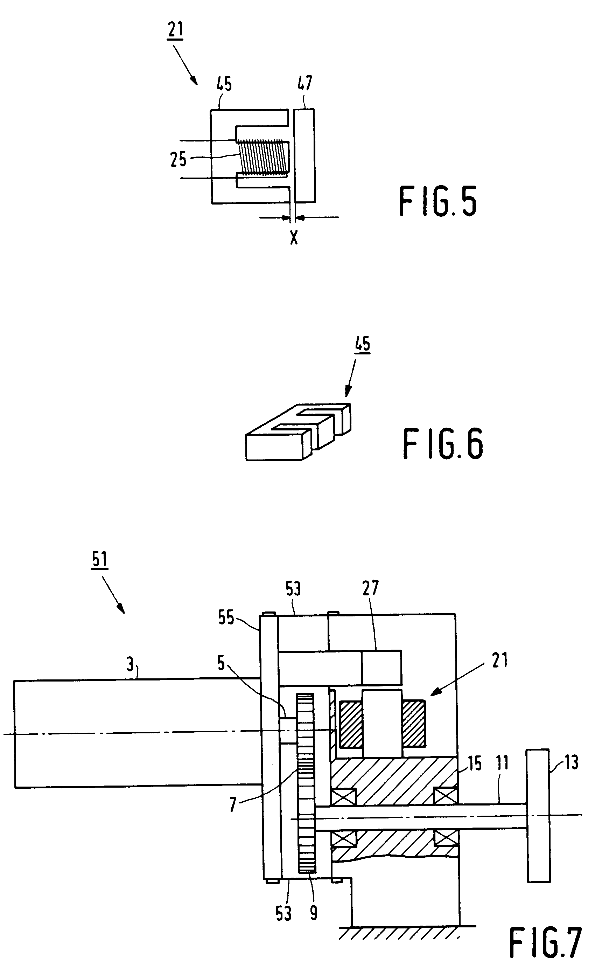

Fig. 5 shows the actuator 21 in the form of an electromagnet of the EI type with an E-shaped yoke 45 and an i-shaped armature 47, the coil 25 being wound on the central leg of the yoke 45 and the armature 47 being clear of the yoke. The gap between the two parts is indicated with X. Fig. 6 shows the bare yoke 45 in perspective view. The two parts 45 and 47 attract one another when current is passed through the coil 25. Electromagnets of the EI type have a comparatively high force density.

Fig. 7 diagrammatically shows another embodiment of a transmission 51 with a parallel guide for the motor shaft 5 relative to the output shaft 11. For this purpose, the servomotor 3 together with the gearwheel 7 and the armature 27 is movably coupled to the housing 15 by means of two or more parallel blade springs 53. The blade springs are fixed on the housing 15 and on a plate 55 which is fastened on the motor 3. The further components are similar to those of the embodiment described above and are given the same reference numerals.

The control of the compression force (prestress force) by means of the control circuit 60 will now be explained with reference to Fig. 8. The transmission is identical to the transmission shown in Fig. 1 and is accordingly not described in any detail. An amplifier for the motor 3 is denoted with reference numeral 61. If a prestress force is to be realised as a function of the motor current, the motor current must be detected. For measuring the motor current, an LEM module LA25-NP, supplied by the firm Liaisons Electroniques Mechaniques LEM S.A., may be used for measuring the motor current. The LEM module 63 supplies a control signal which is proportional to the motor current. The LEM module has the advantage that an electrical separation between the motor current and the control circuit is provided. If prestress is provided on the basis of motor current alone, an incorrect prestress force will be applied in the dynamic case in which a certain acceleration is present, because part of the motor current is used for accelerating the rotor of the motor. To prevent this, a portion proportional to the rotor acceleration is subtracted from the obtained control signal in the differential circuit 62. The rotor acceleration is estimated by an acceleration estimation unit 65 comprising a filtered double differentiator. Fig. 8 shows the Lagrange-transformed equation of such an acceleration estimation unit in module 65. The acceleration may also be determined by an acceleration observer. The acceleration estimation unit 65 provides a signal which is a function of the rotor acceleration. This signal is subtracted from the control signal in the differential circuit 62. 67 denotes a root extractor circuit whose output signal is the square root of the input signal. Such a root extractor circuit is known *per se* from Linear Products Databook, published by Analog Devices Inc., April 1988, pp. 6-13 to 6-21. The object of this is to obtain a linear relationship between the corrected motor current and the compression force provided by the actuator. To adapt the compression force to gear tooth errors of the gearwheels, the speed is estimated by means of a speed estimation unit 69 comprising a filtered differentiator. Fig. 8 shows the Lagrange-transformed equation of such a speed estimation unit in module 69. The speed may also be determined by a speed observer as described in "Practical Application of Second Order Observers to Electromechanical Servo systems" by J. Geerts and J. Scannel in "Journal A", vol. 31, no. 3, September 1990. The rotor speed is estimated in that the position signal of the rotor is differentiated and the differentiated signal is then filtered (low-pass). The output signal of the speed estimation unit 69 is a function of the motor speed. The output signal is supplied to a module 71 in which an empirically determined relation between the speed (horizontal axis) and the adaptation of the actuator current belonging to that speed (vertical axis) is stored. The prestress around the critical speeds of the transmission must be greater than at other speeds so as to prevent the transmission vibrating in a natural frequency. In the transmission 1 used, the transmission was found to vibrate in resonance at a critical speed E. By providing a higher compression force by means of the actuator around the speed E, it is possible to safeguard a sufficient prestress between the gearwheels. To reduce the natural resonance, a vibration damper may be used which is constructed, for example, from a mass mounted on the motor housing 35 with an interposed piece of rubber. The choice of the mass and the piece of rubber is made in such a way that the assembly has a resonance frequency close to the speed E. The signal provided by the module 71 is added to the signal supplied by the root extractor circuit 67 by the summation circuit 72. The output signal of the summation circuit 72 is amplified and supplied to the actuator 21 in the form of a current $I_{act}$. The correct prestress force (compression force) is then exerted by the actuator.

Experiments have shown that the measures according to the invention lead to substantial improvements compared with a comparable transmission having a constant maximum prestress force of, for example, 50 N: firstly, an increase in the positioning accuracy was obtained; the virtual play or hysteresis resulting from friction was halved; what remained was the hysteresis of the servomotor arising from motor bearings and carbon brushes. The angular accuracy of the output shaft is improved by a factor 80 compared with the situation with play (from 8 mrad down to 0.1 mrad). Compared with the situation involving a constant prestress force of 50 N, there is an improvement in the positioning accuracy of the output shaft by a factor 6 (from 0.6 mrad down to 0.1 mrad).

Transmissions according to the invention may be used in mechanical high-precision equipment, in displacement mechanisms for samples to be analysed in X-ray spectrometers, in production machines, robots, positioning mechanisms in general, and wherever no direct-drive motors (without transmission) are available.

**Claims**

1. A transmission (1, 51) with variable mechanical prestress comprising a toothed drive element (7) driven by an electric motor (3) and a toothed driven element (9) cooperating with the drive element (7), at least one of the two elements (7, 9) being rotatable, and comprising an electromagnetic actuator (21) for applying a prestress force which is controllable in dependence on a load to be instantaneously transmitted, whereby the toothed elements (7, 9) are pressed against one another with the flanks of their mutually engaging teeth, the one element (9) having its bearings (29) in a stationary housing (15) and the other element (7) having its bearings (39) in a block (35) which is movable relative to the housing (15), while the two elements (7, 9) can be pressed against one another in radial direction by means of the actuator (21) for generating the prestress force, characterized in that the transmission (1, 51) comprises a control circuit (60) for regulating the prestress force according to the load to be transmitted.

2. A transmission (1, 51) as claimed in claim 1, comprising a pinion (7) on an input shaft (5) and a gearwheel (9) on an output shaft (11) which is parallel to the input shaft (5), characterized in that the gearwheel (9) with the output shaft (11) has its bearings (29) in the housing (15) and the pinion (7) is provided on the motor shaft (5) of the electric motor (3), while the electric motor (3) is tiltable relative to the housing (15) about a pivot axis (P) which is directed transverse to the plane through the motor shaft (5) and the output shaft (11).

3. A transmission (1, 51) as claimed in claim 2, characterized in that the electric motor (3) is coupled to the stationary housing (15) with relative movement possibility by means of two pairs of blade springs (17) which form a cross spring pivot.

4. A transmission as claimed in claim 2 or 3, characterized in that the electromagnetic actuator (21) is constructed as an electromagnet of the EI type with an E-shaped yoke (45) and an I-shaped armature (47), the E-shaped yoke (45) being fastened on the stationary housing (15) together with a coil (25) and the I-shaped armature (47) being provided on the motor housing (35) of the electric motor (3).

5. A transmission (1, 51) as claimed in any one of the preceding claims, characterized in that the transmission (1, 51) comprises a control circuit (60) for controlling the prestress force, which control circuit (60) is provided with a differential circuit (62) for determining a difference between a signal depending on the motor current and a signal depending on the motor acceleration, which control circuit (60) is further provided with a summation circuit (72) for determining the sum of a signal supplied by the differential circuit (62) and a signal depending on the motor speed, and which control circuit (60) is also provided with an amplifier (73) for converting a signal supplied by the summation circuit (72) into an actuator current for energizing the actuator (21).

6. A transmission (1, 51) as claimed in claim 5, characterized in that the control circuit (60) is provided with a root extractor circuit (67) connected between the differential circuit (62) and the summation circuit (72) for determining the square root of the signal supplied by the differential circuit (62).

**Patentansprüche**

1. Getriebe (1, 51) mit veränderlicher mechanischer Vorspannung mit einem von einem Elektromotor (3) und einem mit dem verzahnten Antriebselement (7) zusammenwirkenden verzahnten angetriebenen Element (9) angetriebenen verzahnten Antriebselement (7), wobei mindestens eines der beiden Elemente (7, 9) drehbar ist, und mit einem elektromagnetischen Stellglied (21) zur Ausübung einer in Abhängigkeit von einer verzögerungsfrei zu übertragenden Belastung steuerbaren Vorspannkraft, wobei die verzahnten Elemente (7, 9) mit den Flanken ihrer ineinandergreifenden Zähne aneinandergedrückt werden, die Lager (29) des einen Elements (9) in einem feststehenden Gehäuse (15) und die Lager (39) des anderen Elements (7) in einem zum Gehäuse (15) beweglichen Block (35) angeordnet sind, während beide Elemente (7, 9) zur Erzeugung der Vorspannungskraft mittels eines Stellglieds (21) in Radialrichtung aneinandergedrückt werden können, dadurch gekennzeichnet, daß das Getriebe (1, 51) einen Steuerkreis (60) zur Regelung der Vorspannkraft je nach der zu übertragenden Belastung umfaßt.

2. Getriebe (1, 51) nach Anspruch 1 mit einem Ritzel (7) auf einer Eingangswelle (5) und einem Zahnrad (9) auf einer zur Eingangswelle (5) parallelen Abtriebswelle (11), dadurch gekennzeichnet daß die Lager (29) des Zahnrads (9) mit der Abtriebswelle (11) im Gehäuse (15) angeordnet sind und das Ritzel (7) auf der Motorwelle (5) des Elektromotors (3) angebracht ist, während der Elektromotor (3) um eine quer zur Ebene durch die Motorwelle (5) und die Abtriebswelle (11) angeordnete Schwenkachse (P) zum Gehäuse (15) schwenkbar ist.

3. Getriebe (1, 51) nach Anspruch 2, dadurch gekennzeichnet, daß der Elektromotor (3) mit relativer Bewegungsmöglichkeit mittels zweier ein Querfedergelenk bildender Blattfederpaare (17) mit dem feststehenden Gehäuse (15) gekoppelt ist.

4. Getriebe nach Anspruch 2 oder 3, dadurch gekennzeichnet, daß das elektromagnetische Stellglied (21) als Elektromagnet in E-I-Bauweise mit einem E-förmigen Joch (45) und einem I-förmigen Anker (47) konstruiert ist, wobei das E-förmige Joch (45) zusammen mit einer Spule (25) am feststehenden Gehäuse (15) befestigt und der I-förmige Anker (47) am Motorgehäuse (35) des Elektromotors (3) angebracht ist.

5. Getriebe (1, 51) nach einem der obigen Ansprüche, dadurch gekennzeichnet, daß das Getriebe (1, 51) einen Steuerkreis (60) zur Steuerung der Vorspannkraft umfaßt, welcher Steuerkreis (60) mit einer Differentialschaltung (62) zur Bestimmung einer Differenz zwischen einem vom Motorstrom abhängigen Signal und einem von der Motorbeschleunigung abhängigen Signal versehen ist, welcher Steuerkreis (60) weiter mit einer Additionsschaltung (72) zur Bestimmung der Summe aus einem von der Differentialschaltung (62) abgegebenen Signal und einem von der Motordrehzahl abhängigen Signal versehen ist und welcher Steuerkreis (60) auch mit einem Verstärker (73) zur Umwandlung eines von der Additionsschaltung (72) abgegebenen Signals in einen Stellgliedstrom zur Erregung des Stellglieds (21) versehen ist.

6. Getriebe (1, 51) nach Anspruch 5, dadurch gekennzeichnet, daß der Steuerkreis (60) mit einer zwischen der Differentialschaltung (62) und der Additionsschaltung (72) angeschlossenen Radizierschaltung (67) zur Bestimmung der Quadratwurzel des von der Differentialschaltung (62) abgegebenen Signals versehen ist.

**Revendications**

1. Transmission (1,51) à précontrainte mécanique variable comportant un élément d'entraînement denté (7) entraîné par un moteur électrique (3) et un élément d'entraînement denté (9) coopérant avec l'élément d'entraînement (7), au moins l'un des deux éléments (7, 9) étant rotatif, et comportant un actionneur électromagnétique (21) pour appliquer une force de précontrainte qui est réglable en dépendance d'une charge à transmettre instantanément, de façon que les éléments dentés (7,9) soient pressés l'un contre l'autre par les flancs de leurs dents mutuellement en prise, les paliers (29) d'un élément (9) se trouvent dans un boîtier stationnaire (15) et les paliers (39) de l'autre élément (7) se trouvent dans un bloc (35) qui peut être déplacé par rapport au boîtier (15), alors que les deux éléments (7,9) peuvent être pressés l'un contre l'autre dans la direction radiale à l'aide de l'actionneur (21) pour engendrer la force de précontrainte, caractérisée en ce que la transmission (1,51) est munie d'un circuit de réglage (60) pour régler la force de précontrainte suivant la charge à transmettre.

2. Transmission (1, 51) selon la revendication 1, comportant un pignon (7) sur un arbre d'entrée (5) et une roue dentée (9) sur un arbre de sortie (11), qui est parallèle à l'arbre d'entrée (5), caractérisée en ce que les paliers (29) de la roue dentée (9) avec l'arbre de sortie (11) se trouvent dans le boîtier (15) et le pignon (7) est prévu sur l'arbre moteur (5) du moteur électrique (3), alors que le moteur électrique (3) peut basculer par rapport au boîtier (15) autour d'un axe de rotation (P) qui s'étend transversalement au plan passant par l'arbre moteur (5) et l'arbre de sortie (11).

3. Transmission (1, 51) selon la revendication 2, caractérisée en ce que le moteur électrique (3) est couplé au boîtier stationnaire (15) de façon à pouvoir être déplacé relativement à l'aide de deux paires de ressorts à lames (17) qui constituent un pivot à ressort en croix.

4. Transmission (1, 51) selon les revendications 2 ou 3, caractérisée en ce que l'actionneur électromagnétique est conçu comme un électro-aimant du type EI présentant une culasse en forme d'E (45) et une armature en forme d'I (47), la culasse en forme d'E (45) étant fixée sur le boîtier stationnaire (15) ensemble avec une bobine (25) et l'armature en forme d'I (47) étant appliquée sur le boîtier de moteur (35) du moteur électrique (3).

5. Transmission (1, 51) selon l'une des revendications précédentes, caractérisée en ce que la transmission (1, 51) comprend un circuit de réglage (60) pour régler la force de précontrainte, lequel circuit de réglage (60) est muni d'un circuit différentiel (62) pour déterminer une différence entre un signal suivant le courant de moteur et un signal dépendant de l'accélération du moteur, lequel circuit de réglage (60) est en outre muni de l'un circuit de sommation (72) pour déterminer la somme d'un signal fourni par le circuit différentiel (62) et un signal suivant la vitesse du moteur, et lequel circuit de réglage (60) est également muni d'un amplificateur (73) pour convertir un signal fourni par le circuit de sommation (72) en un courant d'actionneur pour exciter l'actionneur (21).

6. Transmission (1, 51) selon la revendication 5, caractérisée en ce que le circuit de réglage (60) est muni d'un circuit d'extraction de racine (67) connecté entre le circuit différentiel (62) et le circuit de sommation (72) pour déterminer la racine carrée du signal fourni par le circuit différentiel (62).

FIG.1

FIG.2

FIG.3

FIG.4

9

21

45    47

25

X

FIG.5

45

FIG.6

51

53    27

55

3    5    21

7    15    11    13

53    9

FIG.7

# FIG.8